# EUROPÄISCHE PATENTSCHRIFT

(11) **EP 3 614 172 B1**
(45) Veröffentlichungstag und Bekanntmachung des Hinweises auf die Patenterteilung: **22.09.2021**
(21) Anmeldenummer: 18190430.1
(22) Anmeldetag: 23.08.2018
(51) Int. Cl.: G01S 17/10, G01S 17/931, G01S 17/89, G01S 17/02, G01S 17/86

(54) **VERFAHREN UND VORRICHTUNG ZUR OPTISCHEN DISTANZMESSUNG**
METHOD AND DEVICE FOR OPTICALLY MEASURING DISTANCES
PROCÉDÉ ET DISPOSITIF DE MESURE DE DISTANCE OPTIQUE

(43) Veröffentlichungstag der Anmeldung: 26.02.2020
(73) Patentinhaber: Ibeo Automotive Systems GmbH, 22143 Hamburg (DE)
(72) Erfinder: PÜSKÜL, Özgür, 22143 Hamburg (DE)
(74) Vertreter: RGTH

(56) Entgegenhaltungen:
- EP-A1- 3 301 479
- DE-A1- 10 124 160
- US-A1- 2014 333 468

## Beschreibung

Die Erfindung betrifft ein Verfahren sowie eine Vorrichtung zur optischen Distanzmessung.

### Stand der Technik

Optische Distanzmessungen, insbesondere zur Anwendung in der fahrerlosen Navigation von Fahrzeugen, sind aus dem Stand der Technik bekannt. Sie beruhen auf dem Time-of-Flight-Prinzip, wobei zur Messung ein scannender Sensor, insbesondere ein LIDAR (Abkürzung für "light detection and ranging") Sensor eingesetzt wird, der Messpulse aussendet, die an Objekten reflektiert werden, wobei die reflektierten Messpulse detektiert werden. Aus der Bestimmung der Laufzeit der Messpulse von dem Sensor zu den Objekten und zurück kann mit Hilfe der Lichtgeschwindigkeit auf die Distanz zu diesen Objekten geschlossen werden.

Allerdings sind die aus dem Stand der Technik bekannten LIDAR-Sensoren nicht fähig, sämtliche Objekte zu erfassen. Beispielsweise können Objekte eine geringe Remission haben. Dies bedeutet, dass ausgesandte Messpulse an ihnen kaum reflektiert werden, sodass der reflektierte Messpuls nicht mehr empfangen wird. Derartige Objekte sind in der Folge kaum bzw. nicht detektierbar. Im Stand der Technik ist es üblich, Bereiche, in denen keine Objekte erkannt wurden, als Freiraum zu deklarieren. Allerdings kann eine fehlerhafte Freiraummarkierung zu einer gefährlichen Fehleinschätzung der Situation führen, insbesondere dann, wenn sich im als Freiraum markierten Bereich in Wirklichkeit ein Objekt mit geringer Remission befindet.

DE 101 24 160 A1 offenbart ein Verfahren zur Erzeugung eines entfernungsauflösenden Bildes eines Gegenstandes mittels eines optoelektronischen Sensors, der mehrere Empfangselemente aufweist.

### Darstellung der Erfindung: Aufgabe, Lösung, Vorteile

Der vorliegenden Erfindung liegt die Aufgabe zugrunde ein Verfahren sowie eine Vorrichtung zur Distanzmessung derart weiterzuentwickeln, dass die Erkennungswahrscheinlichkeit von Objekten mit geringer Remission deutlich erhöht wird.

Gelöst wird die oben genannte Aufgabe durch ein Verfahren zur optischen Distanzmessung, das das Durchführen mindestens einer Messung umfasst, wobei eine Messung das Aussenden von Messpulsen mittels einer Sendeeinheit und das Empfangen von an einem Objekt reflektierten Messpulsen mittels einer Empfangseinheit zum Erkennen von Objekten innerhalb eines Sichtfeldes der Empfangseinheit umfasst. Die Empfangseinheit umfasst dabei Empfangselemente, wobei das Verfahren erfindungsgemäß das Empfangen eines Hintergrundsignals mittels der Empfangselemente der Empfangseinheit umfasst. Pro Empfangseinheit wird jeweils eine Intensität des Hintergrundsignals ermittelt, wobei die ermittelten Intensitäten verglichen werden, um mittels der Messung nicht erkannte Objekte innerhalb des Sichtfeldes der Empfangseinheit zu erkennen. Innerhalb eines Intensitätsbildes des Sichtfeldes der Empfangseinheit wird mindestens ein Bereich mit minimaler Intensität des Hintergrundsignals festgestellt wird, wobei dem mindestens einen Bereich mit minimaler Intensität eine Verdeckung im Sichtfeld der Empfangseinheit zugordnet wird, die von einem mittels der Messung nicht erkannten Objekt stammt.

Eine optische Distanzmessung zeichnet sich dadurch aus, dass unter Ausnutzung von optischen Signalen, hier optischen Messpulsen, Distanzen bestimmt werden. Unter dem Begriff "Distanz" ist eine Entfernung zu verstehen. Unter der vom Messpuls zurückgelegten Distanz ist die Strecke zwischen der Sendeeinheit, das den Messpuls ausgesandt hat, und dem Objekt, das diesen reflektiert hat, plus der Strecke zwischen dem Objekt und der Empfangseinheit, das den entsprechenden reflektierten Messpuls empfangen hat, zu verstehen. Die reflektierten Messpulse stellen jeweils Rückstreusignale der ausgesandten Messpulse dar. In anderen Worten handelt es sich bei den an einem Objekt reflektierten Messpulsen um zuvor mit Hilfe der Sendeeinheit ausgesandte Messpulse.

Im Detail umfasst die Sendeeinheit mehrere Sendeelemente, wobei die Empfangseinheit mehrere Empfangselemente umfasst. Dabei ist die zurückgelegte Distanz insbesondere die Strecke zwischen dem entsprechenden Sendeelement und dem Objekt sowie dem entsprechenden Empfangselement und dem Objekt. Da es sich bei dem mindestens einen Objekt typischerweise um ein dreidimensionales Objekt handelt, sodass einige Bereiche des Objektes näher und andere Bereiche des Objektes weiter entfernt angeordnet sein können, ist mit dem Begriff Distanz zu dem Objekt die Entfernung zu zumindest einer Stelle des Objektes gemeint, und zwar der Stelle, auf die der Messpuls aufgetroffen und an der dieser reflektiert wurde. Mit Laufzeit ist die Zeit zu verstehen, die der Messpuls für die zuvor beschriebene Distanz gebraucht hat. Das Verfahren dient vorzugsweise zur Distanzmessung zur Anwendung in der fahrerlosen Navigation eines Fahrzeuges. Dafür werden die Distanzen zu sämtlichen Objekten, die in einem Messbereich, vorzugsweise in einem Sichtfeld, der Sendeeinheit und/oder Empfangseinheit liegen, bestimmt. Vorteilhafterweise handelt es sich bei dem Verfahren um ein, vorzugsweise scannendes, LIDAR-Verfahren.

Bevorzugterweise umfasst eine Messung das Aussenden von Messpulsen mittels der Sendeeinheit. Bei einem Messpuls handelt es sich insbesondere um ein optisches, insbesondere elektromagnetisches, Signal. Der Messpuls hat vorzugsweise eine Wellenlänge, die nicht aus dem für das menschliche Auge sichtbaren Bereich stammt. Vorzugsweise wird aus Sicherheitsgründen unsichtbares Infrarot verwendet. Bevorzugterweise weist ein Messpuls eine Pulsdauer auf, sodass man den Messpuls als eine zeitlich begrenzte Portion elektromagnetischer Strahlung verstehen kann. Da es sich bei dem Messpuls um ein elektromagnetisches Signal handelt und somit die Geschwindigkeit des Messpulses bekannt ist, kann aus der Laufzeit eines Messpulses mit Hilfe der Lichtgeschwindigkeit darauf geschlossen werden, welche Strecke der Messpuls in der Laufzeit hinter sich gebracht hat. Vorzugsweise werden mehrere Messungen durchgeführt, wobei insbesondere bei einer Messung ein Sendeelement mindestens einen Messpuls, insbesondere eine Folge von Messpulsen, aussendet.

Bei der Sendeeinheit handelt es sich insbesondere um eine Sendematrix. Unter dem Begriff "Sendematrix" ist insbesondere ein Array von Sendeelementen zu verstehen. Entsprechend handelt es sich bei der Empfangseinheit vorzugsweise um eine Empfangsmatrix, d. h. insbesondere um einen Array von Empfangselementen. Eine Matrix wird vorzugsweise als dreidimensionaler, insbesondere plattenförmiger, Körper verstanden, auf dessen einen Oberfläche die entsprechenden Elemente, Sendeelemente oder Empfangselemente, angeordnet sind. Vorzugsweise handelt es sich bei den Sendeelementen jeweils um einen Laser, sodass die Sendematrix als Laser-Array zu verstehen ist. Die Empfangselemente werden vorzugsweise von Dioden, insbesondere Avalanche-Photodioden, am meisten bevorzugt Einzelphotonen-Avalanche-Dioden, oder Pin-Dioden gebildet. Bei den Empfangselementen handelt es sich insbesondere um Pixel, sodass die Empfangseinheit einen Pixelarray darstellt.

Das Aussenden der Messpulse und das Empfangen der reflektierten Messpulse dienen zum Erkennen von Objekten innerhalb eines Sichtfeldes der Empfangseinheit. Insbesondere umfasst das Verfahren das Erkennen von Objekten mit Hilfe der Messungen. Insbesondere kann dem Verfahren, vorzugsweise einer Vorrichtung zur Durchführung des Verfahrens, ein "Messbereich" zugeordnet werden, aus dem Reflektionen der ausgesandten Messpulse empfangen werden. Vorzugsweise kann eine Vorrichtung, mit Hilfe derer das Verfahren zur optischen Distanzmessung ausgeführt wird, im Messbereich Messungen durchführen. Der Messbereich wird durch ein Sichtfeld und eine Reichweite definiert. Die Reichweite definiert einen maximalen Distanzbereich, der sich ausgehend von einer Vorrichtung zur Distanzmessung durchgehend in Strahlenausbreitungsrichtung erstreckt. Die maximale Reichweite definiert somit, aus welcher maximalen Distanz Reflektionen von Objekten erwartet werden können. Das Sichtfeld wird durch zwei Winkelsektoren in zwei Ebenen aufgespannt, die insbesondere senkrecht zueinander stehen können. In einer dieser Ebenen, d. h. zweidimensional, kann das Sichtfeld als Winkelsektor verstanden werden. Das heißt, einem Kreissektor ohne Begrenzung durch einen Kreisbogen. In anderen Worten wird der Winkelsektor ausschließlich durch zwei Kreisradien ausgehend von der Vorrichtung begrenzt. Dreidimensional bildet das Sichtfeld eine sich in Strahlenausbreitungsrichtung ins Unendliche erstreckende Pyramide. Durch die Reichweite wird diese unendlich lange Pyramide in ihrer Höhe eingeschränkt, sodass der Messbereich gebildet wird. Das Sichtfeld und die Reichweite können technisch bedingt sein oder per Definition festgelegt werden.

Durch das Aussenden und das Empfangen der entsprechenden Reflektionen von Messpulsen werden vorzugsweise Objekte innerhalb des Sichtfeldes der Empfangseinheit ermittelt. Durch die Bestimmung der Laufzeit kann auch die Distanz zu einer Vorrichtung zur Durchführung des Verfahrens bestimmt werden, sodass die genaue Position der ermittelten Objekte innerhalb des Messbereichs ermittelt werden können.

Auf Basis der Messpulse nicht erkannte Objekte können erfindungsgemäß mit Hilfe des Empfangens eines Hintergrundsignals mittels der Empfangselemente erkannt werden.

Bei dem Hintergrundsignal handelt es sich insbesondere um eine Hintergrundbeleuchtung, in anderen Worten ein Hintergrundlicht. Insbesondere umfasst das Hintergrundsignal sämtliche elektromagnetische Strahlung, vorzugsweise Licht, das von den Empfangselementen wahrgenommen wird und nicht zuvor mittels der Sendeeinheit ausgesandt wurde. Das Hintergrundsignal kann auch als Störsignal aufgefasst werden. Das Hintergrundsignal ist im Vergleich zu den Messpulsen nicht als zeitlich begrenzte Portion elektromagnetischer Strahlung zu verstehen, sondern ist ein kontinuierliches Signal. Das Hintergrundsignal sollte in zumindest ähnlicher Stärke, d. h. mit ähnlicher Intensität, von sämtlichen Empfangselementen der Empfangseinheit empfangen werden, außer es wird von einem Objekt verdeckt. Mit Hilfe dieses Prinzips werden mit Hilfe der Messungen nicht erkannte Objekte erkannt. Insbesondere wird das Hintergrundsignal nicht gefiltert. In anderen Worten wird das Hintergrundsignal ungefiltert mittels der Empfangselemente empfangen.

Bevorzugterweise stammt das Hintergrundsignal von anderen Quellen als der Sendeeinheit. Das Hintergrundsignal umfasst insbesondere Störlichteinflüsse. Darunter fallen beispielsweise die Sonne, Fahrzeugrück- und frontleuchten und andere künstliche Lichtquellen. In anderen Worten handelt es sich beim Hintergrundsignal um Rauschen. Ein derartiges Rauschen wird im Stand der Technik typischerweise gefiltert und somit unterdrückt. Vorzugsweise wird das Hintergrundsignal hier allerdings bewusst ungefiltert verwendet, um mittels der Messung nicht zu erhaltene Informationen über Objekte im Sichtfeld der Empfangseinheit zu erhalten.

Pro Empfangselement wird jeweils eine Intensität des Hintergrundsignals ermittelt, wobei die ermittelten Intensitäten des Hintergrundsignals verglichen werden, um mittels der Messung nicht erkannte Objekte innerhalb des Sichtfeldes der Empfangseinheit zu erkennen. Insbesondere wird das empfangene Hintergrundsignal auf Inhomogenitäten überprüft. Unter einer Inhomogenität ist eine Inhomogenität der Intensität des Hintergrundsignals in Bezug auf die Empfangselemente zu verstehen. Jedem Empfangselement kann vorzugsweise ein Bereich des Sichtfeldes zugeordnet werden. Jedem Empfangselement kann somit ein Unterwinkelsektor des Sichtfeldes zugeordnet werden. Wenn sich ein Objekt im Sichtfeld des Empfangselementes befindet, wird das Hintergrundsignal verdeckt und somit vermindert, da das Objekt das Hintergrundsignal abschirmt. Das vom entsprechenden Empfangselement wahrgenommene Hintergrundsignal sinkt entsprechend. Durch einen Vergleich der Intensitäten der Empfangselemente kann eine Verdeckung im Sichtfeld der Empfangseinheit festgestellt werden. Diese Verdeckung muss von einem Objekt stammen, das über die Messungen, beispielsweise aufgrund einer niedrigen Remission, nicht detektiert wurde, da die an dem Objekt reflektierten Messpulse im Hintergrundsignal, in anderen Worten im Rauschen, untergehen. Erfindungsgemäß kann dieses Objekt jedoch trotzdem erkannt werden, sodass die Erkennungswahrscheinlichkeit und die Präzision der Markierung von Freiraum innerhalb des Sichtfeldes einer Empfangseinheit deutlich verbessert wird. Ferner kann die Reichweite verbessert werden, da bei sehr hoher Distanz zur Vorrichtung dennoch Objekte, deren Remission bei dieser Distanz nicht mehr zur Objekterkennung mittels der Messung ausreichen würde, trotzdem erkannt werden.

Vorzugsweise wird die Intensität des Hintergrundsignals pro Empfangselement akkumuliert, um das Intensitätsbild des Sichtfeldes der Empfangseinheit zu erzeugen. Insbesondere wird die empfangene Intensität des Hintergrundsignals pro Empfangselement über einen bestimmten Zeitabschnitt akkumuliert.

Durch die Akkumulierung der Intensität pro Empfangselement wird vorzugsweise jeweils eine Intensität des Hintergrundsignals pro Empfangselement ermittelt.

Auf Basis der ermittelten Intensitäten pro Empfangselement wird vorzugsweise das Intensitätsbild des Sichtfeldes der Empfangseinheit erzeugt. Das Intensitätsbild stellt die ermittelte Intensität pro Empfangselement optisch dar. Insbesondere gibt das Intensitätsbild die Empfangseinheit optisch wider, indem jedem Empfangselement ein Kästchen des Intensitätsbild zugeordnet wird. Es werden innerhalb des Intensitätsbildes mindestens ein Bereich mit minimaler Intensität des Hintergrundsignals festgestellt. Minimal ist im Vergleich zu anderen Bereichen des Intensitätsbildes zu verstehen.

Bereichen mit minimaler Intensität werden jeweils eine Verdeckung im Sichtfeld der Empfangseinheit zugeordnet, wobei die Verdeckung von einem mittels der Messung nicht erkannten Objekt stammt. Insbesondere wird allen Bereichen mit minimaler Intensität eine derartige Verdeckung zugeordnet. Unter einer Verdeckung ist ein Schattenbereich des Hintergrundsignals, ausgelöst durch das Objekt, in Richtung der Vorrichtung beziehungsweise der Empfangseinheit, vorzugsweise in Strahlenausbreitungsrichtung des Hintergrundsignals, zu verstehen.

Nach Erstellen des Intensitätsbildes und dem Vergleich der Intensitäten der Empfangseinheiten um mittels der Messung nicht erkannte Objekte zu erkennen, kann eine neue, d. h. aktuelle, Intensität pro Empfangselement ermittelt werden, um ein neues, d. h. aktuelles, Intensitätsbild zu erzeugen.

Vorzugsweise umfasst das Verfahren ferner das Zuordnen eines Objektes, und zwar eines mittels der Messung nicht erkannten Objektes, zu einer Verdeckung im Sichtfeld. Auf diese Weise werden Objekte, vorzugsweise mittels der Messung nicht erkannte Objekte, erkannt. Obwohl somit kein Rückstreusignal von einem verdeckten Objekt detektiert wird mittels der Messung, ist es demnach möglich, Objekte zu erkennen, indem man das Hintergrundsignal innerhalb einer Empfangseinheit betrachtet und auf eine Inhomogenität der detektierten Intensität prüft.

Vorteilhafterweise kann das Verfahren eine Analyse des Hintergrundsignals umfassen. Vorzugsweise wird das Hintergrundsignal ungefiltert analysiert. Durch eine entsprechende Analyse und/oder Charakterisierung des Hintergrundsignals kann vorzugsweise präziser von einem Bereich mit minimaler Intensität bzw. von einer Verdeckung auf die genauen Maße des Objektes, das diese hervorgerufen hat, geschlossen werden. Im Gegensatz zu einer Erkennung von Objekten mittels Messungen kann mittels einer Erkennung von Objekten durch einen Vergleich der Intensität des Hintergrundsignals in Bezug auf die Empfangselemente zwar auf die Position des Objektes innerhalb des Sichtfeldes geschlossen werden, allerdings nicht auf die Position des Objektes in Bezug auf die Distanz zur Vorrichtung. Insbesondere hier kann eine Analyse des Hintergrundsignals, ferner bevorzugt eine Charakterisierung des Hintergrundsignals, dazu dienen, mehr Informationen über die Quellen des Hintergrundsignals und deren Position zu bestimmen und somit eine präzisere Angabe der Objektposition innerhalb des Messbereiches der Empfangseinheit zu ermitteln. Für die Analyse kann vorzugsweise das Wissen verwendet werden, dass um mittels der Messung detektierte Objekte herum weniger Rauschpunkte anfallen, sodass eine Rauschanalyse zu besseren Erkenntnissen führen kann, im Hinblick darauf wo sich das Objekt tatsächlich befindet. Ferner kann eine Analyse des Hintergrundsignals auch für weitere Merkmale zur Objekterkennung herangezogen werden. Insgesamt kann die aus dem Hintergrundsignal gewonnene Information gezielt zur Verbesserung der Objekterkennung mittels der Messung herangezogen werden.

Ferner bevorzugt kann das Verfahren eine Charakterisierung des Hintergrundsignals umfassen. Bei der Charakterisierung geht es insbesondere um die Quelle des Hintergrundsignals. Das Hintergrundsignal setzt sich insbesondere aus Signalanteilen unterschiedlicher Quellen zusammen. Durch die Charakterisierung des Hintergrundsignals kann bestimmten Signalanteilen eine Quelle zugeordnet werden, beispielsweise die Sonne und/oder künstliche Lichtquellen.

In einem weiteren Aspekt betrifft die vorliegende Erfindung eine Vorrichtung zur optischen Distanzmessung, wobei die Vorrichtung eine Sendeeinheit und eine Empfangseinheit umfasst und wobei die Vorrichtung zur Durchführung eines oben beschriebenen Verfahrens ausgebildet ist. Bei der Vorrichtung handelt es sich bevorzugterweise um einen, vorzugsweise scannenden, LIDAR-Sensor. Ferner bevorzugt weist die Vorrichtung eine Auswerteeinheit auf, die dazu ausgebildet, insbesondere konfiguriert, ist mittels der Messung nicht erkannte Objekte zu ermitteln, vorzugsweise eine Intensität des Hintergrundsignals pro Empfangselement zu ermitteln und die ermittelten Intensitäten zu vergleichen. Ferner bevorzugt weist die Vorrichtung eine Steuereinheit auf, die dazu ausgebildet ist, die Sendeeinheit und/oder die Empfangseinheit und/oder die Auswerteeinheit zu steuern.

Ferner bezieht sich die vorliegende Erfindung auf ein Computerprogrammprodukt, das ein computerlesbares Speichermedium umfasst, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen. Weiterhin betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen.

### Kurze Beschreibung der Zeichnungen

Es zeigen schematisch:
- Figur 1: ein Verfahrensschema eines erfindungsgemäßen Verfahrens;
- Figur 2: eine erfindungsgemäße Vorrichtung;
- Figur 3: ein Sichtfeld einer Empfangseinheit;
- Figur 4: eine zweidimensionale Ansicht des Sichtfeldes nach Figur 3; und
- Figur 5: ein Intensitätsbild des Hintergrundsignals.

### Bevorzugte Ausführungsformen der Erfindung

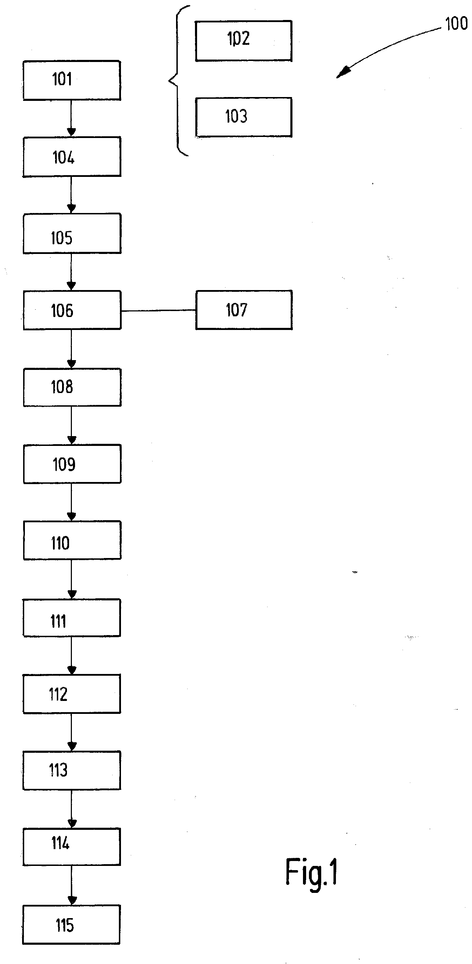

In Figur 1 ist ein Verfahrensschema eines erfindungsgemäßen Verfahrens (100) dargestellt.

Gemäß des erfindungsgemäßen Verfahrens (100) wird mindestens eine Messung durchgeführt (101). Die Durchführung (101) einer Messung umfasst das Aussenden (102) von Messpulsen und das Empfangen (103) von an einem Objekt reflektierten Messpulsen zur Erkennung (104) von Objekten innerhalb eines Sichtfeldes (16) einer Empfangseinheit (12). Ferner bevorzugt umfasst das Verfahren (100) die Erkennung (104) von Objekten auf Basis der Messungen.

Ferner umfasst das Verfahren das Empfangen (105) eines Hintergrundsignals mit Hilfe von Empfangselementen der Empfangseinheit (12). Es wird eine Intensität (21) pro Empfangselement ermittelt (106). Dies geschieht vorzugsweise durch Akkumulieren (107) der Intensität des Hintergrundsignals pro Empfangselement. Ferner bevorzugt wird ein Intensitätsbild (20) des Sichtfeldes (16) erzeugt (108).

Das Verfahren umfasst ferner einen Vergleich (109) der ermittelten Intensitäten des Hintergrundsignals der Empfangselemente. Ferner werden Bereiche (22) mit minimaler Intensität festgestellt (110). Mittels der Messung werden nicht erkannte Objekte erkannt (111). Die Erkennung (111) umfasst die Zuordnung (112) einer Verdeckung (19) zu einem Bereich (22) mit minimaler Intensität. Insbesondere kann einer Verdeckung (19) ferner ein Objekt (18) zugeordnet werden (113).

Außerdem kann das Verfahren eine Analyse (114) des Hintergrundsignals und/oder eine Charakterisierung (115) des Hintergrundsignals umfassen. Durch eine entsprechende Analyse (114) und/oder Charakterisierung (115) des Hintergrundsignals kann vorzugsweise präziser von einem Bereich (22) mit minimaler Intensität beziehungsweise von einer Verdeckung (19) auf die genauen Maße und/oder die genaue Position des Objektes (18), das die Verdeckung hervorgerufen hat, geschlossen werden.

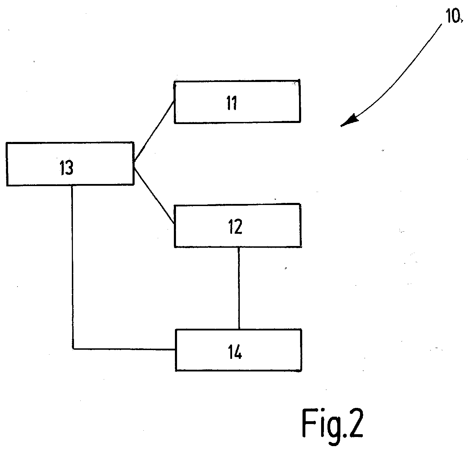

Figur 2 zeigt eine Vorrichtung (10) zur optischen Distanzmessung, die zur Durchführung eines erfindungsgemäßen Verfahrens (100) dient.

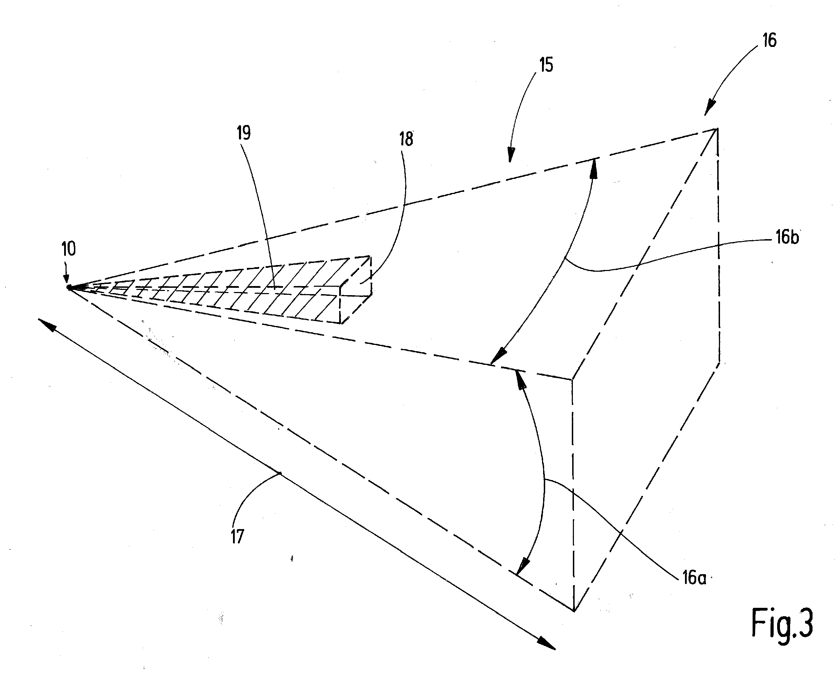

Die Vorrichtung (10) umfasst eine Sendeeinheit (11) umfassend mehrere Sendeelemente sowie eine Empfangseinheit (12) umfassend mehrere Empfangselemente. Ferner umfasst die Vorrichtung (10) eine Steuereinheit sowie eine Auswerteeinheit (14). Die Steuereinheit (13) ist dazu ausgebildet, die Sendeeinheit (11) und/oder die Empfangseinheit (12) und/oder die Auswerteeinheit (14) entsprechend zu steuern. Die Auswerteeinheit (14) ist insbesondere dazu ausgebildet, von der Empfangseinheit (12) empfangene Daten, insbesondere das empfangene Hintergrundsignal, auszuwerten. Unter eine Auswertung fällt insbesondere mindestens einer, mehrere oder sämtliche der Schritte 106 bis 115. Ferner kann unter die Auswertung der Schritt 104 fallen. Figur 3 zeigt ein Sichtfeld (16) einer Empfangseinheit (12) einer Vorrichtung (10) zur optischen Distanzmessung.

Die Vorrichtung (10) zur optischen Distanzmessung ist zur einfacheren Darstellung punktförmig wiedergegeben. Der Empfangseinheit (12) der Vorrichtung (10) kann ein Messbereich (15) zugeordnet werden. Der Messbereich (15) wird durch ein Sichtfeld (16) sowie eine Reichweite (17) definiert. Die Reichweite (17) wird durch eine maximale Distanz zur Vorrichtung (10) bestimmt. Das Sichtfeld (16) wird durch zwei Winkelsektoren (16a, 16b) aufgespannt.

Innerhalb des Messbereiches (15) befindet sich ein Objekt (18). Das Objekt (18) verdeckt das Hintergrundsignal derart, dass eine Verdeckung (19) entsteht. Unter einer Verdeckung (19) ist ein Schattenbereich des Hintergrundsignals, ausgelöst durch das Objekt, in Richtung der Vorrichtung (10) beziehungsweise der Empfangseinheit (12) zu verstehen.

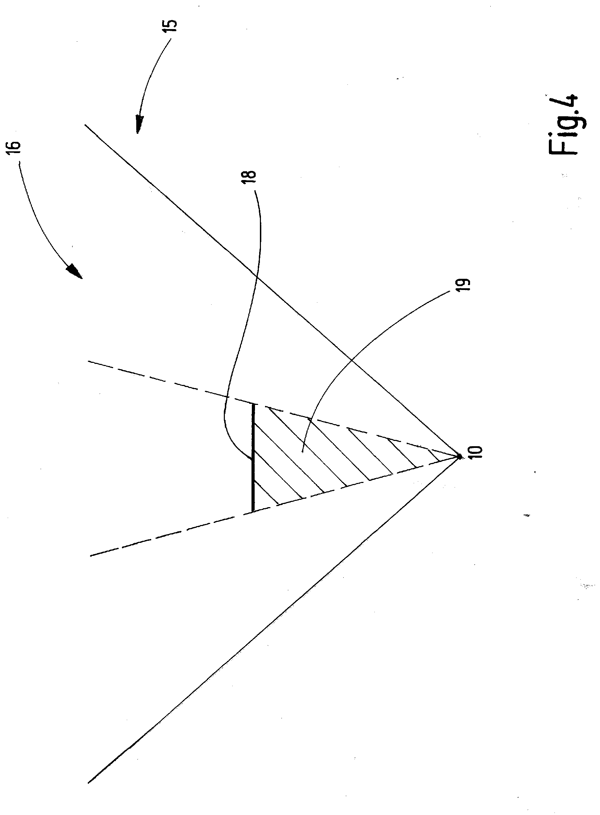

In Figur 4 ist eine zweidimensionale Ansicht des Sichtfeldes (16) aus Figur 3 zu sehen. Aus Figur 4 ist klar zu entnehmen, wie das Objekt (18) eine Verdeckung (19) in Richtung der Vorrichtung (10) erzeugt.

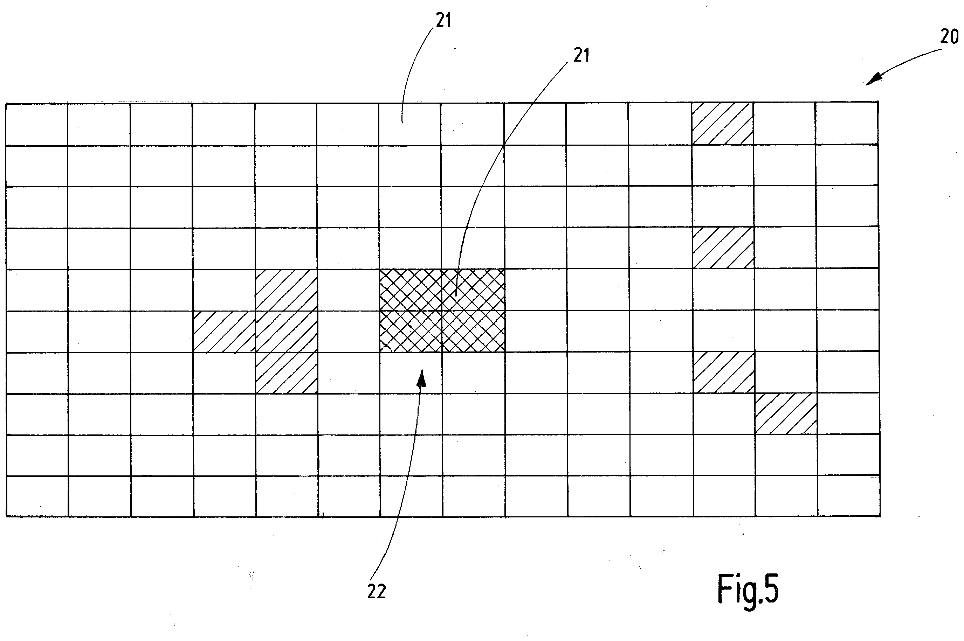

In Figur 5 ist ein Intensitätsbild (20) gezeigt. Im Intensitätsbild (20) wird die ermittelte Intensität (21) pro Empfangselement dargestellt. Jedes in Figur 5 dargestellte Kästchen kann einem Empfangselement zugeordnet werden. Deutlich ist zu sehen, wie ein Objekt (18) beziehungsweise die dadurch verursachte Verdeckung (19) einen Bereich (22) mit minimaler Intensität hervorruft. Aus einem Vergleich der Intensitäten (21) der Empfangselemente kann auf den Bereich (22) mit minimaler Intensität geschlossen werden. Hieraus wiederum kann auf eine Verdeckung (19) und somit auf ein mittels der Messung nicht erkanntes Objekt (18) geschlossen werden.

### Bezugszeichenliste

- 100: Verfahren zur optischen Distanzmessung
- 101: Durchführen mindestens einer Messung
- 102: Aussenden von Messpulsen
- 103: Empfangen von reflektierten Messpulsen
- 104: Erkennen von Objekten
- 105: Empfangen eines Hintergrundsignals mittels der Empfangselemente
- 106: Ermitteln einer Intensität des Hintergrundsignals pro Empfangselement
- 107: Akkumulieren der Intensität des Hintergrundsignals pro Empfangselement
- 108: Erzeugen eines Intensitätsbild des Sichtfeldes der Empfangseinheit
- 109: Vergleich der ermittelten Intensitäten des Hintergrundsignals der Empfangselemente
- 110: Feststellen von Bereichen mit minimaler Intensität des Hintergrundsignals
- 111: Erkennen von mittels der Messung nicht erkannter Objekte
- 112: Zuordnung einer Verdeckung zu einem Bereich mit minimaler Intensität
- 113: Zuordnung eines mittels der Messung nicht erkannten Objektes zu der Verdeckung
- 114: Analyse des Hintergrundsignals
- 115: Charakterisierung des Hintergrundsignals

- 10: Vorrichtung zur optischen Distanzmessung
- 11: Sendeeinheit
- 12: Empfangseinheit
- 13: Steuereinheit
- 14: Auswerteeinheit
- 15: Messbereich
- 16: Sichtfeld
- 16a, 16b: Winkelsektoren
- 17: Reichweite
- 18: Objekt
- 19: Verdeckung
- 20: Intensitätsbild
- 21: Intensität pro Empfangselement
- 22: Bereiche mit minimaler Intensität

## Patentansprüche

1. Verfahren (100) zur optischen Distanzmessung,
wobei das Verfahren (100) das Durchführen (101) mindestens einer Messung umfasst,
wobei eine Messung das Aussenden (102) von Messpulsen mittels einer Sendeeinheit (11) und das Empfangen (103) von an einem Objekt reflektierten Messpulsen mittels einer Empfangseinheit (12) zum Erkennen (104) von Objekten innerhalb eines Sichtfeldes (16) der Empfangseinheit (12) umfasst,
wobei die Empfangseinheit (12) Empfangselemente umfasst,
wobei das Verfahren (100) das Empfangen (105) eines Hintergrundsignals mittels der Empfangselemente umfasst,
wobei pro Empfangselement jeweils eine Intensität (21) des Hintergrundsignals ermittelt wird (106),
**dadurch gekennzeichnet, dass** die ermittelten Intensitäten (21) des Hintergrundsignals der Empfangselemente verglichen werden (109), um mittels der Messung nicht erkannte Objekte innerhalb des Sichtfeldes (16) der Empfangseinheit (12) zu erkennen (111),
wobei innerhalb eines Intensitätsbildes (20) des Sichtfeldes (16) der Empfangseinheit (12) mindestens ein Bereich (22) mit minimaler Intensität des Hintergrundsignals festgestellt wird (110),
wobei dem mindestens einen Bereich (22) mit minimaler Intensität eine Verdeckung (19) im Sichtfeld (16) der Empfangseinheit (12) zugordnet wird (112), und wobei die Verdeckung (19) von einem mittels der Messung nicht erkannten Objekt (18) stammt.

2. Verfahren (100) nach Anspruch 1,
**dadurch gekennzeichnet, dass**
das Hintergrundsignal von anderen Quellen als der Sendeeinheit (11) stammt.

3. Verfahren (100) nach einem der Ansprüche 1 oder 2,
**dadurch gekennzeichnet, dass**
die Intensität des Hintergrundsignals pro Empfangselement akkumuliert wird (107), um das Intensitätsbild (20) des Sichtfeldes (16) der Empfangseinheit (12) zu erzeugen (108).

4. Verfahren (100) nach Anspruch 3,
**dadurch gekennzeichnet, dass**
das Intensitätsbild (20) des Sichtfeldes (16) der Empfangseinheit (12) erzeugt wird (108).

5. Verfahren (100) nach Anspruch 1,
**dadurch gekennzeichnet, dass**
das Verfahren (100) das Zuordnen (113) eines mittels der Messung nicht erkannten Objektes (108) zu der Verdeckung (19) im Sichtfeld (16) umfasst.

6. Verfahren (100) nach einem der vorherigen Ansprüche,
**dadurch gekennzeichnet, dass**
das Verfahren (100) das Erkennen (111) von einem mittels der Messung nicht erkannten Objekt (18) umfasst.

7. Verfahren (100) nach einem der vorherigen Ansprüche,
**dadurch gekennzeichnet, dass**
das Verfahren (100) eine Analyse (114) des Hintergrundsignals umfasst.

8. Verfahren (100) nach einem der vorherigen Ansprüche,
**dadurch gekennzeichnet, dass**
das Verfahren (100) eine Charakterisierung (115) des Hintergrundsignals umfasst.

9. Vorrichtung (10) zur optischen Distanzmessung,
wobei die Vorrichtung (10) eine Sendeeinheit (11) und eine Empfangseinheit (12) umfasst,
**dadurch gekennzeichnet, dass**
die Vorrichtung (10) zur Durchführung eines Verfahrens (100) nach einem der Ansprüche 1 bis 8 ausgebildet ist.

10. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 8, gegebenenfalls im Zusammenspiel mit einer Vorrichtung (10) gemäß Anspruch 9, durchzuführen.

11. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 8, gegebenenfalls im Zusammenspiel mit einer Vorrichtung (10) gemäß Anspruch 9, durchzuführen.

## Claims

1. Method (100) for optical distance measurement,
wherein the method (100) comprises performing (101) at least one measurement,
wherein one measurement comprises the transmission (102) of measurement pulses by means of a transmission unit (11) and the reception (103) of measurement pulses reflected at an object by means of a receiving unit (12) for detecting (104) objects within a field of view (16) of the receiving unit (12),
wherein the receiving unit (12) comprises receiving elements,
wherein the method (100) comprises the reception (105) of a background signal by means of the receiving elements,
wherein an intensity (21) of the background signal is determined (106) for each receiving element,
**characterized in that**
the determined intensities (21) of the background signal of the receiving elements are compared (109) in order to detect (111) undetected objects within the field of view (16) of the receiving unit (12)
wherein at least one area (22) with minimum intensity of the background signal is detected (110) within an intensity image (20) of the field of view (16) of the receiving unit (12),
wherein an obscuration (19) in the field of view (16) of the receiving unit (12) is assigned (112) to the at least one area (22) with minimum intensity,
and wherein the obscuration (19) originates from an object (18) not detected by means of the measurement.

2. Method (100) according to claim 1,
**characterized in that**
the background signal originates from sources other than the transmission unit (11).

3. Method (100) according to one of claims 1 or 2,
**characterized in that**
the intensity of the background signal per receiving element is accumulated (107) in order to generate (108) the intensity image (20) of the field of view (16) of the receiving unit (12).

4. Method (100) according to claim 3,
**characterized in that**
the intensity image (20) of the field of view (16) of the receiving unit (12) is generated (108).

5. Method (100) according to claim 1,
**characterized in that**
the method (100) comprises the assignment (113) of an object (108) not detected by means of the measurement to the obscuration (19) in the field of view (16).

6. Method (100) according to one of the preceding claims,
**characterized in that**
the method (100) comprises the detection (111) of an object (18) not detected by means of the measurement.

7. Method (100) according to one of the preceding claims,
**characterized in that**
the method (100) comprises an analysis (114) of the background signal.

8. Method (100) according to one of the preceding claims,
**characterized in that**
the method (100) comprises a characterization (115) of the background signal.

9. Device (10) for optical distance measurement,
wherein the device (10) comprises a transmission unit (11) and a receiving unit (12),
**characterized in that**
the device (10) is configured to perform a method (100) according to one of claims 1 to 8.

10. Computer program product comprising a computer-readable storage medium on which a program is stored which enables a computer, after it has been loaded into the memory of the computer, to perform a method (100) according to one of claims 1 to 8, optionally in conjunction with a device (10) according to claim 9.

11. Computer-readable storage medium on which a program is stored which enables a computer, after it has been loaded into the memory of the computer, to perform a method according to one of claims 1 to 8, optionally in conjunction with a device (10) according to claim 9.

## Revendications

1. Procédé (100) pour la mesure optique de distance,
dans lequel le procédé (100) comprend la réalisation (101) d'au moins une mesure,
dans lequel une mesure comprend l'émission (102) d'impulsions de mesure au moyen d'une unité d'émission (11) et la réception (103) d'impulsions de mesure réfléchies par un objet au moyen d'une unité de réception (12) pour reconnaître (104) des objets dans un champ de vision (16) de l'unité de réception (12),
dans lequel l'unité de réception (12) comprend des éléments de réception,
dans lequel le procédé (100) comprend la réception (105) d'un signal de fond au moyen des éléments de réception,
dans lequel, par élément de réception, respectivement une intensité (21) du signal de fond est détectée (106),
**caractérisé en ce que**
les intensités détectées (21) du signal de fond des éléments de réception sont comparées (109) pour reconnaître (111), au moyen de la mesure, des objets non reconnus dans le champ de vision (16) de l'unité de réception (12),
dans lequel, au sein d'une image d'intensité (20) du champ de vision (16) de l'unité de réception (12), au moins une zone (22) avec une intensité minimale du signal de fond est déterminée (110),
dans lequel on associe (112) à l'au moins une zone (22) à intensité minimale une occultation (19) dans le champ de vision (16) de l'unité de réception (12),
et dans lequel l'occultation (19) provient d'un objet (18) non reconnu au moyen de la mesure.

2. Procédé (100) selon la revendication 1,
**caractérisé en ce que**
le signal de fond provient d'autres sources que l'unité d'émission (11).

3. Procédé (100) selon l'une des revendications 1 ou 2,
**caractérisé en ce que**
l'intensité du signal de fond par élément de réception est accumulée (107) pour générer (108) l'image d'intensité (20) du champ de vision (16) de l'unité de réception (12).

4. Procédé (100) selon la revendication 3,
**caractérisé en ce que**
l'image d'intensité (20) du champ de vision (16) de l'unité de réception (12) est générée (108).

5. Procédé (100) selon la revendication 1,
**caractérisé en ce que**
le procédé (100) comprend l'association (113) d'un objet (108), non reconnu au moyen de la mesure, à l'occultation (19) dans le champ de vision (16).

6. Procédé (100) selon l'une des revendications précédentes,
**caractérisé en ce que**
le procédé (100) comprend la reconnaissance (111) d'un objet (18) non reconnu au moyen de la mesure.

7. Procédé (100) selon l'une des revendications précédentes,
**caractérisé en ce que**
le procédé (100) comprend une analyse (114) du signal de fond.

8. Procédé (100) selon l'une des revendications précédentes,
**caractérisé en ce que**
le procédé (100) comprend une caractérisation (115) du signal de fond.

9. Dispositif (10) pour la mesure optique de distance,
dans lequel le dispositif (10) comprend une unité d'émission (11) et une unité de réception (12),
**caractérisé en ce que**
le dispositif (10) est conçu pour la mise en œuvre d'un procédé (100) selon l'une des revendications 1 à 8.

10. Produit de programme informatique, lequel comprend un support d'enregistrement lisible par ordinateur sur lequel un programme est enregistré, lequel permet à un ordinateur, après avoir été chargé dans la mémoire de l'ordinateur, de mettre en œuvre un procédé (100) selon l'une des revendications 1 à 8, le cas échéant en combinaison avec un dispositif (10) selon la revendication 9.

11. Support de stockage lisible par ordinateur sur lequel un programme est enregistré, lequel permet à un ordinateur, après avoir été chargé dans la mémoire de l'ordinateur, de mettre en œuvre un procédé selon l'une des revendications 1 à 8, le cas échéant en combinaison avec un dispositif (10) selon la revendication 9.
